(19) Europäisches Patentamt / European Patent Office / Office européen des brevets

(11) **EP 3 982 511 B1**

(12) **EUROPEAN PATENT SPECIFICATION**

(45) Date of publication and mention
of the grant of the patent:
**13.03.2024 Bulletin 2024/11**

(21) Application number: **20201327.2**

(22) Date of filing: **12.10.2020**

(51) International Patent Classification (IPC):
**H02J 9/06** *(2006.01)*     **H02J 11/00** *(2006.01)*
**H02H 3/06** *(2006.01)*

(52) Cooperative Patent Classification (CPC):
**H02J 9/06; H02J 11/00;** H02H 3/063

(54) **ELECTRICAL SUBSTATION, A METHOD OF OPERATING THEREOF, AND A USE THEREOF**

ELEKTRISCHE UNTERSTATION, VERFAHREN ZUM BETRIEB DAVON UND VERWENDUNG DAVON

SOUS-STATION ÉLECTRIQUE, SON MODE DE FONCTIONNEMENT ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.04.2022 Bulletin 2022/15**

(73) Proprietor: **ABB Schweiz AG**
**5400 Baden (CH)**

(72) Inventors:
• **SIMCIC, Victor**
**5400 Baden (CH)**

• **FOUTHIER, Frank**
**68510 Sierentz (FR)**
• **TIFFERT, Florian**
**79761 Waldshut-Tiengen (DE)**
• **HERTENSTEIN, Joerg**
**79787 Lauchringen (DE)**

(74) Representative: **Zimmermann & Partner**
**Patentanwälte mbB**
**Postfach 330 920**
**80069 München (DE)**

(56) References cited:
**US-A1- 2013 257 050     US-A1- 2018 331 569**
**US-A1- 2019 190 254     US-B2- 9 190 827**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to an electrical substation, a method of operating thereof, and a use thereof. According to embodiments, an electrical substation for transferring power from a main power supply line of a main AC power supply system to an AC distribution system for distributing power to at least a first power consumer is provided. According to further embodiments, a method of operating thereof, and a use thereof is provided.

**BACKGROUND**

Weak electrical networks powered by high-voltage transmission and distribution lines are used in different settings, for example when an isolated facility is operated at a remote site and is powered, via a power transformer, from the high-voltage transmission and/or distribution line. This is for example the case in minerals and mining projects, where ore deposits are located in extremely remote areas.

Ensuring a reliable and continuous power supply for such a facility can be difficult. Upon a fault in the high-voltage line (main power supply line) a local AC power source takes over as the power supply for the facility. When the high-voltage line is energized again, restoring the power supply from the high-voltage line can pose difficult challenges. One such challenge is that the weak local electrical network at the facility may not be able to sustain full developed inrush current of the power transformer during energization. The result of this situation is that the power transformer is not successfully energized as the electrical network collapses and the protection system isolate the installation from the electrical network.

In order to allow switching and in particular reconnecting these large power transformers, special solutions are designed. For example, point-of-wave switching protection schemes, single pole switching of high-voltage circuit breakers, and back-feeding of power transformers via the secondary winding via an alternative power source can be used in order to pre-magnetize the power transformer. However, such systems are complex and expensive. Accordingly, there is a need to provide simpler solutions.

Document US9190827 describes a method of service restoration for a power network including decoupling the power network bus from a utility grid in response to an event; after decoupling, energizing the power network bus with the energy storage system via the inverter according to a ramp up process, wherein the ramp up process comprises controlling the inverter to apply a voltage ramp and a frequency ramp to the power network bus; synchronizing the power network bus with the utility grid; and recoupling the power network bus to the utility grid when the power network bus is synchronized with the utility grid.

**SUMMARY**

In view of the above, the following is provided. The main aspect is defined in independent claims 1 and 12. The dependent claims define specific embodiments.

According to an aspect, it is provided an electrical substation for transferring power from a main power supply line of a main AC power supply system to an AC distribution system for distributing power to at least a first power consumer is provided, the electrical substation including an auxiliary transformer, a main transformer, a first busbar coupled to the AC distribution system, a second busbar configured for carrying power at a higher voltage than the first busbar but at a lower voltage than the main power supply line, an AC power source connected to the first busbar, and a control system, the auxiliary transformer having a first low-voltage winding, a second low-voltage winding and a third high-voltage winding, the auxiliary transformer being connected via the first low-voltage winding and the second low-voltage winding to the first busbar and via the third high-voltage winding to the second busbar, the main transformer having a fourth low-voltage winding and a fifth winding, the main transformer being connected via the fourth low-voltage winding to the second busbar and via the fifth winding to the main power supply line, the control system being configured, following an interruption of power supply from the main power supply line, to: power the first power consumer via the first busbar, with power from the AC power source, energize the auxiliary transformer via the second low-voltage winding of the auxiliary transformer, via the first busbar, with power from the AC power source, pre-magnetize the main transformer via the fourth low-voltage winding of the main transformer, via the second low-voltage winding of the auxiliary transformer, via the first busbar, with power from the AC power source, synchronize a first condition of a first electrical conducting line connected to the fifth high-voltage-winding and a second condition of the main power supply line, and energize the main transformer with power from the main power supply line.

According to a further aspect, it is provided a method of operating an electrical substation following an interruption of power supply from a main power supply line of a main AC power supply system, the electrical substation for transferring power from the main power supply line of the main AC power supply system to an AC distribution system for distributing power to at least a first power consumer, the electrical substation including: an auxiliary transformer, a main transformer, a first busbar coupled to the distribution system, a second busbar configured for carrying power at a higher voltage than the first busbar but at a lower voltage than the main power supply line, an AC power source connected to the first busbar, and a control system, the auxiliary transformer having a first low-voltage winding, a second low-voltage winding and a third high-voltage winding, the auxiliary transformer being connected via the first low-voltage winding and the second low-voltage winding to the first busbar and via the third high-voltage winding to the second busbar, the main transformer having a fourth low-voltage winding and a fifth winding, the main transformer being connected via the fourth low-voltage winding to the second busbar and via the fifth winding to the main power supply line, the method including: powering the first power consumer via the first busbar, with power from the AC power source, energizing the auxiliary transformer via the second low-voltage winding of the auxiliary transformer, via the first busbar, with power from the AC power source, pre-magnetizing the main transformer via the fourth low-voltage winding of the main transformer, via the second low-voltage winding of the auxiliary transformer, via the first busbar, with power from the AC power source, synchronizing a first condition of a first electrical conducting line connected to the fifth high-voltage-winding and a second condition of the main power supply line, and energizing the main transformer with power from the main power supply line.

According to a further aspect, it is provided a use of an electrical substation to supply power to at least a first power consumer, the electrical substation according to embodiments or aspects described herein.

Beneficially, the system according to embodiments of the invention provides an integrated emergency power system combined with pre-magnetization transformer inrush management. Existing practice within electrical projects is to have separate emergency power generation and stand-alone transformer inrush management systems, which have limitations. Beneficially, this system provides an integrated, elegant, simple and effective solution. Beneficially, simplicity of design also increases safety.

Further aspects, advantages and features of the present disclosure are apparent from the following description and the accompanying drawings.

## BRIEF DESCRIPTION OF THE DRAWINGS

So that the manner in which the above recited features of the present disclosure can be understood in more detail, a more particular description of the disclosure, briefly summarized above, may be had by reference to the accompanying drawings which are briefly described as follows.

FIG. 1 shows a schematic drawing illustrating an electrical substation according to embodiments described herein;

FIG. 2 shows a schematic diagram illustrating an electrical substation according to embodiments described herein; and

FIG. 3 shows a schematic diagram illustrating a method of operating an electrical substation according to embodiments described herein.

## DETAILED DESCRIPTION

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations. Within the following description of the figures, the same reference numbers refer to the same or to similar components.

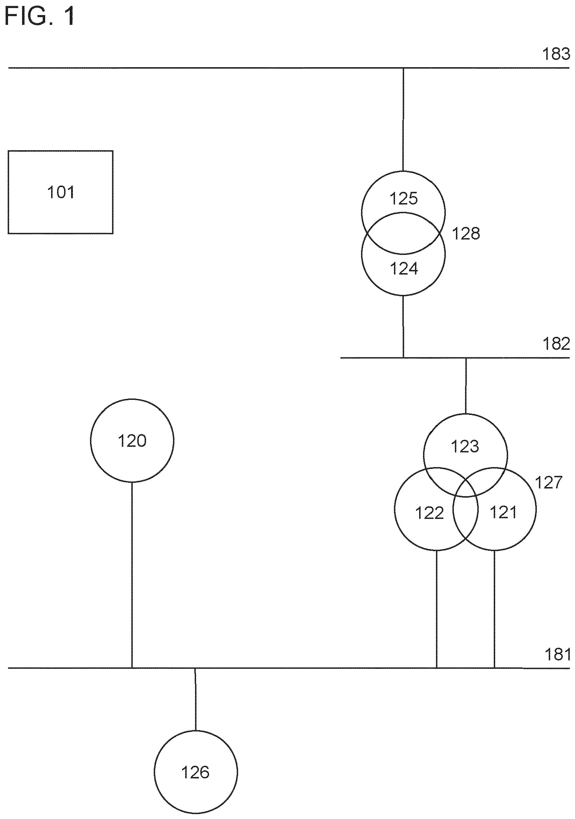

First, relevant components of an embodiment of the invention are described with reference to FIG. 1. FIG. 1 shows an electrical substation. According to the embodiment shown in FIG. 1, the electrical substation is supplied power from a main power supply system (main power supply line 183), e.g. a high-voltage transmission line or a line connected thereto, and is configured for transferring the power to an AC distribution system (first busbar 181).

According to the embodiment shown in FIG. 1, the electrical substation includes an auxiliary transformer 127, a main transformer 128 and an AC power source 120. According to the embodiment shown in FIG. 1, the main transformer 128 steps the voltage of the main power supply line 183 down for primary distribution via the second busbar 182. According to the embodiment shown in FIG. 1, the auxiliary transformer 127 steps the voltage further down for secondary distribution via the first busbar 181. The electrical substation thus distributes power to the first busbar 181 and thereby to at least a first power consumer 126.

According to the embodiment shown in FIG. 1, the auxiliary transformer 127 includes the first low-voltage winding 121 for normal operation as described above, e.g. for stepping down the voltage when power is being supplied from the main power supply line 183.

Following an interruption of power supply from the main power supply line 183, e.g. a power outage or blackout, the AC power source 120 is switched on as a back-up power source, in order to still power the first busbar 181 and thereby the first power consumer 126.

When the power supply from the main power supply line 183 resumes again, the problem of restoring the power supply from the high-voltage line, as described in the background section, is solved in the following manner according to the embodiment shown in FIG. 1.

The auxiliary transformer 127 includes a second low-voltage winding 122 for providing a separate path for energization of the auxiliary transformer 127 and pre-magnetization of the main transformer 128 using the AC power source 120. Specifically, the AC power source 120 is used to energize the auxiliary transformer 127 and pre-magnetize the main transformer 128 via the separate path of the second low-voltage winding 122.

Thereby, large inrush currents can be kept down to a manageable level with minimal additional equipment, in large part thanks to the dual use of the auxiliary transformer 127. Thus, the embodiment allows the specific challenges of a weak network to be addressed using potentially already existing or already planned emergency backup power supply (AC power source 120 in the embodiment shown in FIG. 1).

According to an aspect, the second low-voltage winding 122 may be specifically configured for minimising the inrush current of the auxiliary transformer 127 and for supplying the no-load current necessary for pre-magnetizing the main transformer 128, while the first low-voltage winding 121 may be effectively configured (e.g. power rated, impedance voltage rated) for normal operation of supplying the loads on the first busbar 181.

Beneficially, this provides a simplified solution of using the emergency power to provide emergency power and via the specially configured second low-voltage winding 122, to energize the auxiliary transformer and to pre-magnetize the main transformer. Accordingly, according to the embodiment shown in FIG. 1, when the interruption of power supply from the main power supply line 183 has ended, the main transformer 128 may be energized successfully despite being on a weak network, owing to the main transformer 128 already being pre-magnetized as described.

Accordingly, emergency power and transformer pre-magnetization may be integrated according to the embodiment shown in FIG. 1.

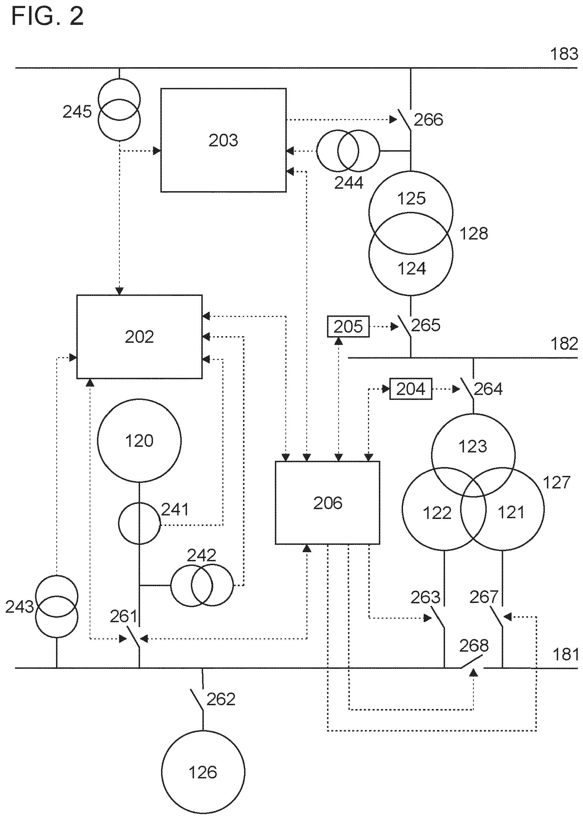

FIG. 2 shows an electrical substation including a number of embodiments, which may be combined as described herein. In Fig. 2, elements corresponding to elements of Fig. 1 have the same reference sign, and the description of Fig. 1 is also applicable to Fig. 1 and vice versa.

According to an embodiment shown in FIG. 2, following an interruption of power supply from the main power supply line 183, any, some or all of the first busbar 181, auxiliary transformer 127, second busbar 182, and main transformer 128 may be de-energized.

According to an embodiment shown in FIG. 2, the AC power source 120 may subsequently provide emergency power to the first power consumer 126 by operating at least the first switch 261. It may be understood that any of the switches may be provided or not provided. For example, if the first switch 261 is provided and the second switch 262 not provided., then the AC power source 120 may power the first power consumer 126 simply by operating the first switch 261.

According to an embodiment shown in FIG. 2, the AC power source 120 may energize the auxiliary transformer 127 via the second low-voltage winding 122 by operating at least the third switch 263. This may occur after, at the same time or before the powering of the first power consumer, according to the provision and operation of the respective switches. Beneficially, flexibility is provided to address system specific technical considerations, e.g. power interruption tolerance of first power consumer, transient current/voltage dynamics.

According to an embodiment shown in FIG. 2, following a return of power supply from the main power supply line 183, the AC power source 120 may energize the auxiliary transformer 127 (if not already energized), and may pre-magnetize the main transformer 128.

According to an embodiment shown in FIG. 2, the AC power source 120 may energize the second busbar 182 via the auxiliary transformer 127. According to an embodiment shown in FIG. 2, the AC power source 120 may pre-magnetize the main transformer 128 via the auxiliary transformer 127 (via the specially configured second low-voltage winding 122).

According to an embodiment shown in FIG. 2, the AC power source 120 may be adjusted (e.g. frequency) to synchronize a first condition (e.g. phase) of the main transformer 128 (e.g. a first electrical conducting line connected to the fifth winding 125) with a second condition (e.g. phase) of the main power supply line 183, before closing the sixth switch 266 to energize the main transformer 128.

It may be appreciated that the first condition may be synchronized with the second condition by adjusting the AC power source 120 or by other means or method as known to the skilled person. Thus, adjusting the AC power source 120 is given as a non-limiting example.

According to an embodiment shown in FIG. 2, following the return of power supply from the main power supply line 183, the first power consumer 126 may be returned to normal supply via the first low-voltage winding 121 by operating at least the seventh switch 267.

According to an embodiment shown in FIG. 2, the AC power source 120 may be switched off and the separate energization path via the second low-voltage winding 122 may be deactivated by operating at least the third switch 263.

According to an embodiment shown in FIG. 2, the electrical substation includes various control elements, e.g. an AC power source control panel 202, a high-voltage protection relay synchrocheck 203, a first protection relay 204, and a second protection relay 205 and a supervisory controller 206 for performing any, some or all of the method according to embodiments described herein.

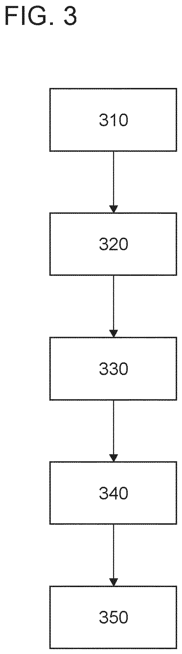

FIG. 3 shows a method of operating an electrical substation according to embodiments described herein. According to an embodiment shown in FIG. 3, the method includes firstly powering the first power consumer via the first busbar, with power from the AC power source 310, then secondly energizing the auxiliary transformer via the second low-voltage winding of the auxiliary transformer, via the first busbar, with power from the AC power source 320, then thirdly pre-magnetizing the main transformer via the fourth low-voltage winding of the main transformer, via the second low-voltage winding of the auxiliary transformer, via the first busbar, with power from the AC power source 330, then fourthly synchronizing a first condition of a first electrical conducting line connected to the fifth high-voltage-winding and a second condition of the main power supply line 340, then fifthly energizing the main transformer with power from the main power supply line 350.

Next, individual aspects of an apparatus of the invention are described in more detail. Each of these aspects is optional and can be combined with any embodiment or other aspect disclosed herein, unless specified otherwise.

Electrical substation

According to an aspect, an electrical substation for transferring power from a main power supply line 183 of a main AC power supply system to an AC distribution system for distributing power to at least a first power consumer 126 is provided.

According to embodiments, the electrical substation includes an auxiliary transformer 127, a main transformer 128, a first busbar 181 coupled to the AC distribution system, a second busbar 182 configured for carrying power at a higher voltage than the first busbar 181 but at a lower voltage than the main power supply line 183, an AC power source 120 connected to the first busbar 181, and a control system 101.

According to embodiments, the auxiliary transformer 127 includes a first low-voltage winding 121, a second low-voltage winding 122 and a third high-voltage winding 123. According to embodiments, the auxiliary transformer 127 is connected via the first low-voltage winding 121 and the second low-voltage winding 122 to the first busbar 181 and via the third high-voltage winding 123 to the second busbar 182.

According to embodiments, the main transformer 128 includes a fourth low-voltage winding 124 and a fifth winding 125. According to embodiments, the main transformer 128 is connected via the fourth low-voltage winding 124 to the second busbar 182 and via the fifth winding 125 to the main power supply line 183.

According to embodiments, the control system 101 is configured, following an interruption of power supply from the main power supply line 183, to power the first power consumer 126 via the first busbar 181, with power from the AC power source 120, energize the auxiliary transformer 127 via the second low-voltage winding 122 of the auxiliary transformer 127, via the first busbar 181, with power from the AC power source 120, pre-magnetize the main transformer 128 via the fourth low-voltage winding 124 of the main transformer 128, via the second low-voltage winding 122 of the auxiliary transformer 127, via the first busbar 181, with power from the AC power source 120, synchronize a first condition of a first electrical conducting line connected to the fifth high-voltage-winding 125 and a second condition of the main power supply line 183, and energize the main transformer 128 with power from the main power supply line 183.

Beneficially, the system may be simplified. Beneficially, emergency power and transformer magnetization scheme may be integrated. Beneficially, less hardware, less capital resources, less installation resources and less operating resources may be required. Beneficially, hardware are used and applied efficiently. Beneficially, integrated solution with reduced hardware, lower installation and maintenance resource requirements may be provided. Beneficially, safety and reliability may be improved. Beneficially, where networks are weak, switching of large power transformers, including for example industrial and utility substations, can be sustained. Beneficially, network stability may be improved by curtailing inrush currents. Beneficially, operational and maintenance procedure is reduced with simpler automation via use of the control system.

Main AC power supply system, second busbar and first busbar

According to embodiments, a main power supply line 183 may be a main AC transmission line or a line connected to a transmission line. According to embodiments, a main AC power supply system may be an AC transmission network or a network connected to an AC transmission network. In an example, the main power supply line 183 may be a high-voltage line configured to operate at at least 35kV or even at at least 52 kV, e.g., at 220 kV. There is no particular upper limit for the voltage of the high-voltage line, and the voltage can be, e.g., up to 700 kV or even higher. Herein, AC voltages are defined as RMS voltages.

According to embodiments, the second busbar 182 may be a distribution busbar or a primary distribution busbar. For example, the second busbar 182 may be may be configured to operate at a voltage of at least 1 kV, preferably at least 3 kV and/or at most 66 kV, or preferably at most 35kV, e.g. at 33 kV.

According to embodiments, the first busbar 181 may be a distribution busbar or a secondary distribution busbar. For example, the first busbar 181 may be may be configured to operate at a voltage of at least 100 V and of at most 4 kV or preferably at most 1 kV, e.g., at 400 V.

Main transformer

According to embodiments, the main transformer 128 is a two-winding transformer. According to embodiments, the main transformer 128 includes the fourth low-voltage winding 124 and the fifth winding 125. According to embodiments, the main transformer 128 is connected to the second busbar 182 via the fourth low-voltage winding 124.

According to aspects and embodiments described herein, a 'fifth winding 125' may alternatively be termed 'fifth high-voltage winding 125' and vice-versa.

According to embodiments, the main transformer 128 is a transformer is configured to step transmission voltage down to (primary) distribution voltage. For example, the main transformer 128 may be rated to step 220 kV down to 33 kV. In an example, the main transformer 128 may have a (nominal) power rating between 60 MVA and 240 MVA, e.g. 120 MVA. In an example, the main transformer 128 may have a (positive sequence) impedance voltage value between 5% and 15%, e.g. 10%. In an example, the main transformer 128 may have a no-load current value between 0.035% and 0.12%, e.g. 0.24%. In an example, the main transformer 128 may have a no-load losses between 22 kW and 88 kW, e.g. 44 kW.

According to embodiments, the main transformer 128 may be connected to a weak power system or a weak main AC power supply system. For example, the main transformer may be connected to a main AC power supply system that has a short-circuit ratio of less than 3.

According to embodiments, the main transformer 128 is connected to the main power supply line 183 via the fifth winding 125. For example, the fifth winding 125 may be rated 220 kV and the main power supply line 183 may be configured to be operated at 220 kV. Accordingly, the main transformer 128 may be a transformer configured to step transmission voltage down to (primary) distribution voltage.

Auxiliary transformer

According to embodiments, the auxiliary transformer 127 is a transformer is configured to step the distribution voltage down further, for example from a primary distribution voltage to a secondary distribution voltage. For example, the auxiliary transformer 127 may be rated to step 33 kV down to 400 V.

According to embodiments, the auxiliary transformer 127 is a three-winding transformer. According to embodiments, the auxiliary transformer 127 includes the first low-voltage winding 121, the second low-voltage winding 122, and the third high-voltage winding 123. According to embodiments, the auxiliary transformer 127 is connected to the first busbar 181 via the first low-voltage winding 121 and the second low-voltage winding 122. According to embodiments, the auxiliary transformer 127 is connected to the second busbar 182 via the third high-voltage winding 123.

According to embodiments, the second low-voltage winding 122 is configured to minimise the maximum inrush current (of the auxiliary transformer 127) during energization of the auxiliary transformer 127 via the second low-voltage winding 122 with power from the AC power source 120.

According to embodiments, the impedance voltage of the auxiliary transformer 127 (via the second low-voltage winding 122) is configured such as to minimise the maximum inrush current of the auxiliary transformer 127 during energization via the second low-voltage winding 122 (by the AC power source 120).

In an example, the maximum inrush current, $I_{max}$ of the auxiliary transformer 127 (via the second low-voltage winding 122) may be determined according to equation (1).

$$I_{max} = \frac{V_m}{wx(L'_s + L_{sc})} x (2 + \frac{wx(\gamma_0 - \gamma_s)}{V_m}) \qquad \dots (1)$$

where:

$I_{max}(A)$: Maximum inrush current;
$V_m(V)$: Peak voltage;
$L'_s(H)$: Saturation inductance of the auxiliary transformer;

$L_{SC}$(H): Short-circuit inductance of the network or the AC power source;
w(rad/s): Angular frequency;
$\gamma_0$(Wb): Auxiliary transformer residual flux;
$\gamma_s$(Wb): Auxiliary transformer saturation flux.

Alternatively or in addition, the maximum inrush current, $I_{max}$ of the auxiliary transformer 127 (via the second low-voltage winding 122) may be determined using a software tool e.g. based on a dynamic simulation of the auxiliary transformer 127 during energization via the second low-voltage winding 122.

According to embodiments, the auxiliary transformer 127 may be configured for being energized by the AC power source 120 (via the second low-voltage winding 122). According to embodiments, the auxiliary transformer 127 may be configured such that the maximum inrush current during energization by the AC power source 120 (via the second low-voltage winding 122) is less than the short-circuit current of the AC power source 120.

### First low-voltage winding

In an example, the first low-voltage winding 121 may have a (nominal) power rating between 100 kVA and 2500 kVA, e.g. 200 kVA. In an example, the first low-voltage winding 121 and the third high-voltage winding 123 may have a (positive sequence) impedance voltage value between 2% and 8%, e.g. 4%. According to embodiments, the first low-voltage winding 121 and the third high-voltage winding 123 may have a (positive sequence) impedance voltage value of at most 10%, e.g. 4%. In an example, the first low-voltage winding 121 may be connected to the first busbar 181 by a wye-connection.

According to embodiments, the first low-voltage winding 121 may be configured for feeding power supplied via the main power supply line 183 to the first busbar 181. According to embodiments, the first low-voltage winding 121 and the third high-voltage winding 123 may have a (positive sequence) impedance voltage value for feeding power supplied via the main power supply line 183 to the first busbar 181.

### Second low-voltage winding

According to embodiments, the second low-voltage winding 122 may have a power rating sufficient for supplying a magnetization current of the main transformer 128. In an example, the second low-voltage winding 122 may have a (nominal) power rating between 50 kVA and 600 kVA, e.g. 100 kVA. In an example, the second low-voltage winding 122 may be connected to the first busbar 181 by a wye-connection.

In an example, the second low-voltage winding 122 and the third high-voltage winding 123 may have a (positive sequence) impedance voltage value between 10% and 20%, e.g. 15%. In an example, the second low-voltage winding 122 and the third high-voltage winding 123 may have a (positive sequence) impedance voltage value of at least 10%, e.g. 15%.

### Third high-voltage winding

According to embodiments, the third high-voltage winding 123 may have a power rating sufficient for supplying at least the first power consumer 126 and optionally (all) further loads (connected to the first busbar 181). In an example, the third high-voltage winding 123 may have a (nominal) power rating between 150 kVA and 2500 kVA, e.g. 300 kVA. In an example, the third high-voltage winding 123 may be connected to the second busbar 182 by a delta-connection.

### First and second low-voltage windings

According to embodiments, the auxiliary transformer 127 may be configured with a higher impedance voltage value between the second low-voltage winding 122 and the third high-voltage winding 123 than between the first low-voltage winding 121 and the third high-voltage winding 123.

In an example, the second low-voltage winding 122 and the third high-voltage winding 123 may have a (positive sequence) impedance voltage value of at least twice of a (positive sequence) impedance voltage value of the first low-voltage winding 121 and the third high-voltage winding 123.

According to embodiments, a power rating of the second low-voltage winding 122 may be lower than a power rating of the first low-voltage winding 121. In an example, a power rating of the second low-voltage winding 122 may be at most 70%, e.g. 35%, of a power rating of the power source 120.

According to embodiments, the first low-voltage winding 121 and the second low-voltage winding 122 may be configured to be operated at the same voltage.

According to embodiments, the second low-voltage winding 122 may be configured for limiting pre-magnetization current during pre-magnetization of the main transformer 128.

According to embodiments, the second low-voltage winding 122 and the third high-voltage winding 123 may have a (positive sequence) impedance voltage value configured for limiting a pre-magnetization current during pre-magnetization of the main transformer 128.

According to embodiments, the power for the pre-magnetization of the main transformer 128 is supplied through the second low-voltage winding 122 (e.g. rather than the first low-voltage winding 121). According to embodiments, the power for the pre-magnetization is supplied through an adjusted pre-magnetization path, e.g. high-impedance path, of the auxiliary transformer 127. Beneficially, current inrush from the AC power source 120 and voltage dips are curtailed.

According to embodiments, the auxiliary transformer 127 may be configured for pre-magnetizing the main transformer 128. According to embodiments, the auxiliary transformer 127 may be configured to carry the pre-magnetization current of the main transformer 128. According to embodiments, the auxiliary transformer 127 may be enclosed in a housing enclosure. According to embodiments, the auxiliary transformer 127 may be a dry transformer. According to embodiments, the housing enclosure may include at least one of the third switch 263, the fourth switch 264, and the seventh switch 267.

Impedance voltage

According to embodiments, an impedance voltage value may be understood as a positive sequence impedance value. According to embodiments, an impedance voltage may known by the symbol, $U_k$ or Z. According to embodiments, $U_k$ may be according to IEC standards. According to embodiments, Z may be according to NEMA /ANSI standards. According to embodiments, a unit of impedance voltage value may be percentage or %. According to embodiments, the impedance voltage value is determined by the construction of the transformer.

First power consumer

According to embodiments, the first power consumer 126 may be configured to be powered via the first busbar 181. According to embodiments, the first power consumer 126 may be understood as including a plurality of power consumers on the first busbar 181. According to embodiments, the first power consumer 126 may be understood as all critical or essential power consumers on the first busbar 181. In an example, the first power consumer 126 may a plant equipment. In an example, the first power consumer 126 may be a compressor or pump.

AC power source

According to embodiments, the AC power source 120 may be configured with a power rating for powering at least the first power consumer 126, energizing the auxiliary transformer 127 and pre-magnetizing the main transformer 128. In an example, the AC power source 120 has a power rating equal to or more than a sum of the following: a peak power load of the first power consumer 126, a peak inrush power of the auxiliary transformer 127 and a peak inrush power of the main transformer 128.

According to embodiments, the AC power source 120 has a power rating sufficient for all of the following: a peak power load of the first power consumer 126 and further essential/critical power consumers (that are connected to the first busbar 181), a peak inrush power of the auxiliary transformer 127, a no-load loss of the auxiliary transformer 127, a peak inrush power of the main transformer 128 and a no-load loss of the main transformer 128.

According to embodiments, the AC power source 120 may be configured to perform at least one of the following: power the first power consumer 126 via the first busbar 181 beneficially via the first busbar 181, energize the auxiliary transformer 127, pre-magnetize the main transformer 128 beneficially via the auxiliary transformer 127, carry the no-load losses of the main transformer 128, and carry the no-load losses of the auxiliary transformer 127. In an example, the AC power source 120 has a power rating to power the first power consumer and carry the no-load losses of the main transformer 128.

According to embodiments, the AC power source 120 may be a generator, e.g. diesel generator. Alternatively, the AC power source 120 may be a further busbar energized or powered independently of the first busbar 181, the second busbar 182 and the main power supply line 183.

In an example, the AC power source 120 may have a maximum output power of between 150 kW and 2500 kW, e.g. 280 kW. According to embodiments, the AC power source 120 may have a power rating of at least 100 kW, e.g. 280 kW. According to embodiments, the AC power source 120 may be configured to provide backup power indefinitely (e.g. with an emergency generator).

According to embodiments, the AC power source 120 may be a separately excited generator. According to embodiments, the AC power source 120 may be a permanent magnet generator. According to embodiments, the AC power source 120 may include an automatic voltage regulator fed from rotor rotation. According to embodiments, the AC power source 120 may include an automatic voltage regulator having a separate power supply.

Beneficially, such an AC power source 120 can provide increased motor starting capability. Beneficially, such an AC power source 120 can sustain a short-circuit for the time necessary to clear a fault or starting time of motors or inrush demand of transformer(s). Beneficially, such an AC power source 120 can provide sustained short-circuit current during fault conditions which prevent the field from collapsing and allows for faults downstream to clear.

According to embodiments, a rated current of the AC power source 120 may be equal to or more than the maximum inrush current of the auxiliary transformer 127 via the second low-voltage winding 122. In an example, the AC power source 120 is configured to have a current rating equal to or more than the maximum inrush current of the auxiliary transformer 127 (e.g. maximum kVA switching current) via the second low-voltage winding 122.

In an example, a current rating of the AC power source 120 may be determined using the locked rotor motor starting curve datasheet from the generator supplier and selecting the desired transient voltage dip (e.g. 25%). In an example, a transient voltage dip occurs when the auxiliary transformer 127 is energized. In an example, locked rotor curves of the AC power source 120 may follow the short-circuit current curve of a near-to-generator short-circuit (e.g. as described in IEC 60909).

It may be understood that when sub transient and transient phase have elapsed, the synchronous reactance is predominant, and the steady state current is generally less than the nominal current. It may be understood that in a case of a permanent magnet generator, the sustained short-circuit current level and the reaction time of the automatic voltage regulator is higher than a shunt generator and therefore allows a capability of starting bigger motor(s), and sustaining higher transformer inrush current.

In an example, the symmetrical AC short-circuit current, $I_{3phase(kA)}$ may be determined as a function of the generator sub-transient, transient and synchronous data according to equation (2).

$$I_{3phase(kA)} = (I''k - I''k)xe^{\left(\frac{-t}{Td''}\right)} + (I'k - I\ k)xe^{\left(\frac{-t}{Td'}\right)} + Ik \qquad \dots(2)$$

In an example, the symmetrical AC short-circuit current, $I_{3phase(kA)}$ may be expressed according to equation (3) when referring to the generator base power rating.

$$I_{3phase(kA)} = \frac{Sn}{\sqrt{3x}U_n}\left(\frac{1}{X''d} - \frac{1}{X'd}\right)xe^{\left(\frac{-t}{Td''}\right)} + \frac{Sn}{\sqrt{3x}U_n}\left(\frac{1}{X'd} - \frac{1}{Xd}\right)xe^{\left(\frac{-t}{Td'}\right)} + \frac{Sn}{\sqrt{3x}U_n}\frac{1}{Xd}$$

$$\dots(3)$$

Where:

$U_n$: Phase to Phase voltage;
$S_n$: Generator base power;
X"d: Subtransient reactance;
X'd: Transient reactance;
Xd: Synchronous reactance;
Td": Subtransient time constant;
Td': Transient time constant.

In an example, the symmetrical locked rotor current of the AC power source 120 at each instant may be determined according to equation (3).

In an example, the voltage dip of the AC power source 120 may be determined according to equation (4).

$$\text{Voltage dip} = \frac{100 \text{ x } X'd}{X'd + \frac{\text{Generator rated kVA}}{\text{Starting kVA}}} \qquad \dots(4)$$

where:

X'd: Transient Reactance of the generator;
Generator rated kVA: Nominal rating of the transformer;
Starting kVA: Motor start kVA or inrush current kVA.

In an example, the power rating of the AC power source 120 may be determined according to equation (4) e.g. by selecting the desired transient voltage dip. Accordingly, the transient voltage dip, e.g. during energization or switching of the auxiliary transformer 127 may be determined.

Control system

According to embodiments, the control system 101 may include a plurality of controllers and/or sub-control systems. According to embodiments, the control system 101 may include at least one of the following: an AC power source control panel 202, a high-voltage protection relay synchrocheck 203, a first protection relay 204, a second protection relay 205 and a supervisory controller 206 (as shown in FIG. 2 as an example of a control system 101). According to embodiments, the control system 101 may be configured to perform an automatic switching sequence including one or more method steps according to embodiments described herein. According to embodiments, the control system 101 may block manual operation of one or more switches. Beneficially, dangerous operations may be avoided.

According to embodiments, the control system 101 may check that at least one pre-condition is fulfilled before performing one or more method steps according to embodiments described herein. For example, the pre-condition may be that interruption of power supply from the main power supply line 183 has occurred, (all) switch(es) connected to the second busbar 182 are tripped by under-voltage (e.g. fourth switch 264 and fifth switch 265), and switches connected to the first low-voltage winding 121 (e.g. seventh switch 267), the second low-voltage winding 122 (e.g. third switch 263) are open, the AC power source 120 has started, the first busbar 181 is energized by the AC power source 120, and the AC power source 120 is powering the first power consumer 126 or (all) critical or essential load.

AC power source control panel

According to embodiments, the AC power source control panel 202 may be configured to receive a current value of an output of the AC power source 120, e.g. via a first current transformer 241. According to embodiments, the AC power source control panel 202 may be configured to receive a voltage value of an output of the AC power source 120, e.g. via a second voltage transformer 242. According to embodiments, the AC power source control panel 202 may be configured to receive a voltage value of the first busbar 181, e.g. via a third voltage transformer 243. According to embodiments, the AC power source control panel 202 may be configured to receive a voltage value (e.g. magnitude and/or phase) of the main power supply line 183, e.g. via a fifth voltage transformer 245.

According to embodiments, the AC power source control panel 202 may be configured to receive and/or send control signals (e.g. state information or command) from and/or to the first switch 261.

According to embodiments, the AC power source control panel 202 may be configured to receive and/or send control signals (e.g. information and/or command) to the high-voltage protection relay synchrocheck 203, the supervisory controller 206, and/or the AC power source 120.

According to embodiments, the AC power source control panel 202 may be configured to receive a voltage value (e.g. magnitude and/or phase) of a first electrical conducting line (e.g. the first condition) connected to the fifth high-voltage-winding 125, and a voltage value (e.g. magnitude and/or phase) of the main power supply line 183 (e.g. the second condition), e.g. via the high-voltage protection relay synchrocheck 203.

According to embodiments, the AC power source control panel 202 may be configured to adjust an output of the AC power source 120 to synchronize the first condition of a first electrical conducting line connected to the fifth high-voltage-winding 125 and the second condition of the main power supply line 183.

High-voltage protection relay synchrocheck

According to embodiments, the high-voltage protection relay synchrocheck 203 may be configured to receive a voltage value (e.g. magnitude and/or phase; e.g. the second condition) of the main power supply line 183, e.g. via the fifth voltage transformer 245. According to embodiments, the high-voltage protection relay synchrocheck 203 may be configured to receive a voltage value (e.g. magnitude and/or phase; e.g. the first condition) of a first electrical conducting line connected to the fifth high-voltage-winding 125, e.g. via the fourth current transformer 244.

According to embodiments, the AC power source control panel 202 may be configured to receive and/or send control signals (e.g. state information or command) from and/or to the first switch 261. For example, the AC power source control panel 202 may be configured to receive a state of the first switch 261 and/or to change a state of the first switch 261.

Supervisory controller

According to embodiments, the supervisory controller 206 may be a SCADA system. According to embodiments, the supervisory controller 206 may be configured to receive and/or send control signals (e.g. state information or command) from and/or to the AC power source control panel 202, the high-voltage protection relay synchrocheck 203, the first protection relay 204, the second protection relay 205, and/or the AC power source 120 (e.g. via the AC power source control panel 202).

According to embodiments, the supervisory controller 206 may be configured to receive and/or send control signals (e.g. state information or command) from and/or to at least one of the following: the first switch 261, the second switch 262, the third switch 263, the fourth switch 264 (e.g. via the first protection relay 204), the fifth switch 265 (e.g. via the second protection relay 205), the sixth switch 266 (e.g. via the high-voltage protection relay synchrocheck 203), the seventh switch 267, the eight switch 268.

Switches

According to embodiments, a switch (e.g. first switch 261, second switch 262, third switch 263, fourth switch 264, fifth switch 265, sixth switch 266, seventh switch 267, eight switch 268) may be a circuit breaker.

The first switch 261 may be configured to connect (and disconnect) the first busbar 181 and the AC power source 120. The second switch 262 may be configured to connect (and disconnect) the first busbar 181 and the first power consumer 126. The third switch 263 may be configured to connect (and disconnect) the first busbar 181 and the second low-voltage winding 122. The fourth switch 264 may be configured to connect (and disconnect) the second busbar 182 and the third high-voltage winding 123. The fifth switch 265 may be configured to connect (and disconnect) the second busbar 182 and the fourth low-voltage winding 124. The sixth switch 266 may be configured to connect (and disconnect) the main power supply line 183 and the fifth winding 125. The seventh switch 267 may be configured to connect (and disconnect) the first busbar 181 and the first low-voltage winding 121. The eight switch 268 may be configured to connect (and disconnect) a first portion of the first busbar 181 and a second portion of the first busbar 181. The first power consumer may on the first portion of the first busbar 181.

Method of operating an electrical substation

According to an aspect, a method of operating an electrical substation following an interruption of power supply from a main power supply line of a main AC power supply system is provided.

According to embodiments, the method includes powering the first power consumer via the first busbar, with power from the AC power source 310, energizing the auxiliary transformer via the second low-voltage winding of the auxiliary transformer, via the first busbar, with power from the AC power source 320, pre-magnetizing the main transformer via the fourth low-voltage winding of the main transformer, via the second low-voltage winding of the auxiliary transformer, via the first busbar, with power from the AC power source 330, synchronizing the first condition of a first electrical conducting line connected to the fifth high-voltage-winding and the second condition of the main power supply line 340, and energizing the main transformer with power from the main power supply line 350.

Powering the first power consumer

According to embodiments, an interruption of power supply from the main power supply line 183 may be called a main power loss. According to embodiments, an interruption of power supply from the main power supply line 183 may be determined to have occurred by the control system 101. According to embodiments, following an interruption of power supply from the main power supply line 183 has occurred, at least the first power consumer 126 is powered by the AC power source 120 via the first busbar 181.

According to embodiments, following an interruption of power supply from the main power supply line 183, the control system 101 may be configured to energize the first busbar 181, beneficially by closing the first switch 261 connecting the AC power source 120 and the first busbar 181. According to embodiments, the control system 101 may be configured to power the first power consumer 126, beneficially by closing the second switch 262 connecting the first busbar 181 and the first power consumer 126.

According to embodiments, the control system 101 may be configured to determine the occurrence of the interruption of power supply from the main power supply line 183 by determining at least one of the following: a deenergization of the first busbar 181, the second busbar 182, the auxiliary transformer 127, and the main transformer 128.

According to embodiments, following a determination that an interruption of power supply from the main power supply line 183 has occurred, (all) switch(es) connected to the second busbar 182 are tripped by under-voltage (e.g. fourth switch 264, fifth switch 265), switches connected to the first low-voltage winding 121 (e.g. seventh switch 267) and the second low-voltage winding 122 (e.g. third switch 263) are open, the AC power source 120 is started, the first busbar 181 is energized by the AC power source 120, and the AC power source 120 is powering the first power consumer 126 or (all) critical or essential load.

# EP 3 982 511 B1

Energizing the auxiliary transformer

According to embodiments, a return of power supply from the main power supply line 183 may occur following an interruption of power supply from the main power supply line 183. According to embodiments, following a determination that a return of power supply from the main power supply line 183 has occurred, the control system 101 may be configured to energize the auxiliary transformer 127 via the second low-voltage winding 122, via the first busbar 181, with power from the AC power source 120, beneficially by closing the third switch 263 connecting the first busbar 181 and the second low voltage winding 122.

According to embodiments, energizing the auxiliary transformer via the second low-voltage winding of the auxiliary transformer produces a smaller inrush current than energizing the auxiliary transformer via the first low-voltage winding of the auxiliary transformer.

Pre-magnetizing the main transformer

According to embodiments, the control system 101 may be configured to energize the second busbar 182, beneficially by closing the fourth switch 264 connecting the third high-voltage winding 123 and the second busbar 182. According to embodiments, the control system 101 may be configured to pre-magnetize the main transformer 128, beneficially by closing the fifth switch 265 connecting the second busbar 182 and the fourth low-voltage winding 124.

Beneficially, the main transformer 128 may be pre-magnetized, by the AC power source 120, via the first busbar 181 and via the second low-voltage winding 122. Beneficially, transient inrush currents during energization of the main transformer 128 which can otherwise exceed the nominal current, achieve the rated value of short-circuit current, and flow for several seconds, may be reduced or curtailed.

Beneficially the core of the main transformer 128 may be pre-magnetized prior to re-connecting the fifth (high-voltage) winding 125 and the main power supply line 183. Beneficially, the main power transformer 128 may be switched with minimal, negligible, or even no inrush current. Beneficially, even a weak network does not collapse when energizing (e.g. switching) the main transformer 128. Beneficially, a variable voltage variable frequency drive remarginalization system is not necessary.

Synchronizing the first condition

According to embodiments, the control system 101 may be configured to synchronize the first condition of the first electrical conducting line connected to the fifth (high-voltage) winding 125 and the second condition of the main power supply line 183. Accordingly, the main transformer 128 primary voltage and the main power supply line voltage shall be synchronized.

According to embodiments, following a synchronization of the first condition of the first electrical conducting line connected to the fifth (high-voltage) winding 125 and the second condition of the main power supply line 183, the control system 101 may be configured to energize the main transformer 128, beneficially by closing the sixth switch 266 connecting the fifth (high-voltage) winding 125 and main power supply line 183.

Energizing the main transformer

According to embodiments, the control system 101 may be configured to energize the main transformer 128, beneficially by closing the sixth switch 266 connecting the fifth (high-voltage) winding 125 and main power supply line 183.

Transferring the load

According to embodiments, following the energization of the main transformer 126, the control system 101 may be configured to load transfer the first power consumer 126 from the AC power source 120 to the main power supply line 183 via the first low-voltage winding 121.

According to embodiments, the control system 101 may be configured to close the seventh switch 267 connecting the first low-voltage winding 121 and the first busbar 181. According to embodiments, the control system 101 may be configured to open a third switch 263 connecting the first busbar 181 and the second low-voltage winding 122.

According to embodiments, the control system 101 may be configured to switch off or disconnect the AC power source 120 from the first busbar 181, beneficially by opening the first switch 261 connecting the first busbar 181 and the AC power source 120. Accordingly, load, e.g. the first power consumer 126 may be transferred back to network supply e.g. the main power supply line 183.

According to embodiments, the method includes load transferring the first power consumer from the AC power source to the main power supply line via the first low-voltage winding, e.g. following the energizing of the main transformer.

In an example, the method includes powering the first power consumer via the main power supply line via the first low-voltage winding, e.g. following the energizing of the main transformer.

Use of the electrical substation

According to embodiments, it is provided a use of the electrical substation according to aspects or embodiments described herein to supply power to at least the first power consumer 126. According to embodiments, the use of the electrical substation according to aspects or embodiments described herein further includes supplying power to a plant wide distribution system, e.g. via the busbar 182.

**Claims**

1.  An electrical substation for transferring power from a main power supply line (183) of a main AC power supply system to an AC distribution system for distributing power to at least a first power consumer (126), the electrical substation comprising:

    an auxiliary transformer (127), a main transformer (128), a first busbar (181) coupled to the AC distribution system, a second busbar (182) configured for carrying power at a higher voltage than the first busbar (181) but at a lower voltage than the main power supply line (183), an AC power source (120) connected to the first busbar (181), and a control system (101),
    the auxiliary transformer (127) having a first low-voltage winding (121) and a third high-voltage winding (123), the auxiliary transformer (127) being connected via the first low-voltage winding (121) to the first busbar (181) and via the third high-voltage winding (123) to the second busbar (182),
    the main transformer (128) having a fourth low-voltage winding (124) and a fifth winding (125), the main transformer (128) being connected via the fourth low-voltage winding (124) to the second busbar (182) and via the fifth winding (125) to the main power supply line (183),
    **characterized in that**:

    the auxiliary transformer (127) further has a second low-voltage winding (122), the auxiliary transformer (127) being connected to the first busbar (181) via the second low-voltage winding (122),
    the control system (101) being configured, following an interruption of power supply from the main power supply line (183), to:

    power the first power consumer (126) via the first busbar (181), with power from the AC power source (120),
    energize the auxiliary transformer (127) via the second low-voltage winding (122) of the auxiliary transformer (127), via the first busbar (181), with power from the AC power source (120),
    pre-magnetize the main transformer (128) via the fourth low-voltage winding (124) of the main transformer (128), via the second low-voltage winding (122) of the auxiliary transformer (127), via the first busbar (181), with power from the AC power source (120),
    synchronize a first condition of a first electrical conducting line connected to the fifth high-voltage-winding (125) and a second condition of the main power supply line (183), and
    energize the main transformer (128) with power from the main power supply line (183).

2.  The electrical substation according to claim 1, wherein the second low-voltage winding (122) is configured to minimise the maximum inrush current during energization of the auxiliary transformer (127) via the second low-voltage winding (122) with power from the AC power source (120).

3.  The electrical substation according to claim 1 or 2, wherein the control system (101) is configured to perform at least one of the following:

    energize the first busbar (181) by closing a first switch (261) connecting the AC power source (120) and the first busbar (181),
    power the first power consumer (126) by closing a second switch (262) connecting the first busbar (181) and the first power consumer (126),
    energize the auxiliary transformer (127) by closing a third switch (263) connecting the first busbar (181) and the second low voltage winding (122),

energize the second busbar (182) by closing a fourth switch (264) connecting the third high-voltage winding (123) and the second busbar (182),
pre-magnetize the main transformer (128) by closing a fifth switch (265) connecting the second busbar (182) and the fourth low-voltage winding (124), and
energize the main transformer (128) by closing a sixth switch (266) connecting the fifth winding (125) and main power supply line (183).

4. The electrical substation according to any of claims 1 to 3, wherein the control system (101) is configured to close a seventh switch (267) connecting the first low-voltage winding (121) and the first busbar (181).

5. The electrical substation according to claim 4, wherein the control system (101) is configured to open a third switch (263) connecting the first busbar (181) and the second low-voltage winding (122).

6. The electrical substation according to any of claims 1 to 5, wherein the control system (101) is configured to determine the occurrence of the interruption of power supply from the main power supply line (183) by determining a deenergization of the first busbar (181), the second busbar (182), the auxiliary transformer (127), and the main transformer (128).

7. The electrical substation according to any of claims 1 to 6, wherein the first low-voltage winding (121) and the second low-voltage winding (122) are configured to be operated at the same voltage.

8. The electrical substation according to any of claims 1 to 7, wherein a first power rating of the first low-voltage winding (121) is higher than a second power rating of the second low-voltage winding (122).

9. The electrical substation according to any of claims 1 to 8, wherein

the first low-voltage winding (121) is configured for feeding power supplied via the main power supply line (183) to the first busbar (181), or
a first voltage impedance rating of the first low-voltage winding (121) is configured for feeding power supplied via the main power supply line (183) to the first busbar (181).

10. The electrical substation according to any of claims 1 to 9, wherein

the second low-voltage winding (122) is configured for limiting pre-magnetization current during pre-magnetization of the main transformer (128), or
a second voltage impedance rating of the second low-voltage winding (122) is configured for limiting a pre-magnetization current during pre-magnetization of the main transformer (128) and an inrush current during an energization of the main transformer (128).

11. The electrical substation according to any of claims 1 to 10, wherein a power rating of the power source (120) is configured for powering at least the first power consumer (126), energizing the auxiliary transformer (127) and pre-magnetizing the main transformer (128).

12. A method of operating an electrical substation following an interruption of power supply from a main power supply line (183) of a main AC power supply system,
the electrical substation for transferring power from the main power supply line (183) of the main AC power supply system to an AC distribution system for distributing power to at least a first power consumer (126), the electrical substation including:

an auxiliary transformer (127), a main transformer (128), a first busbar (181) coupled to the distribution system, a second busbar (182) configured for carrying power at a higher voltage than the first busbar (181) but at a lower voltage than the main power supply line (183), an AC power source (120) connected to the first busbar (181), and a control system (101),
the auxiliary transformer (127) having a first low-voltage winding (121), and a third high-voltage winding (123),
the auxiliary transformer (127) being connected via the first low-voltage winding (121) to the first busbar (181) and via the third high-voltage winding (123) to the second busbar (182),
the main transformer (128) having a fourth low-voltage winding (124) and a fifth winding (125), the main transformer (128) being connected via the fourth low-voltage winding (124) to the second busbar (182) and via the fifth winding (125) to the main power supply line (183),

**characterized in that**:
the auxiliary transformer (127) further has a second low-voltage winding (122), the auxiliary transformer (127) being connected to the first busbar (181) via the second low-voltage winding (122),
the method comprising:

powering the first power consumer via the first busbar, with power from the AC power source (310),
energizing the auxiliary transformer via the second low-voltage winding of the auxiliary transformer, via the first busbar, with power from the AC power source (320),
pre-magnetizing the main transformer via the fourth low-voltage winding of the main transformer, via the second low-voltage winding of the auxiliary transformer, via the first busbar, with power from the AC power source (330),
synchronizing a first condition of a first electrical conducting line connected to the fifth high-voltage-winding and a second condition of the main power supply line (340), and
energizing the main transformer with power from the main power supply line (350).

13. The method according to claim 12, wherein energizing the auxiliary transformer via the second low-voltage winding of the auxiliary transformer produces a smaller inrush current than energizing the auxiliary transformer via the first low-voltage winding of the auxiliary transformer.

14. The method according to claim 12 or 13, further comprising load transferring the first power consumer from the AC power source to the main power supply line via the first low-voltage winding.

15. Use of the electrical substation of claim 1 to supply power to at least a first power consumer.

**Patentansprüche**

1. Elektrische Unterstation zum Übertragen von Strom von einer Hauptstromversorgungsleitung (183) eines Hauptwechselstromversorgungssystems zu einem Wechselstromverteilungssystem zum Verteilen von Strom an zumindest einen ersten Stromverbraucher (126), wobei die elektrische Unterstation umfasst:

einen Hilfstransformator (127), einen Haupttransformator (128), eine erste Sammelschiene (181), die mit dem Wechselstromverteilungssystem gekoppelt ist, eine zweite Sammelschiene (182), die dazu ausgelegt ist, Strom mit einer höheren Spannung als die erste Sammelschiene (181), aber mit einer niedrigeren Spannung als die Hauptstromversorgungsleitung (183) zu transportieren, eine Wechselstromquelle (120), die mit der ersten Sammelschiene (181) verbunden ist, und ein Steuersystem (101),
wobei der Hilfstransformator (127) eine erste Niederspannungswicklung (121) und eine dritte Hochspannungswicklung (123) aufweist, wobei der Hilfstransformator (127) über die erste Niederspannungswicklung (121) mit der ersten Sammelschiene (181) und über die dritte Hochspannungswicklung (123) mit der zweiten Sammelschiene (182) verbunden ist,
wobei der Haupttransformator (128) eine vierte Niederspannungswicklung (124) und eine fünfte Wicklung (125) aufweist, wobei der Haupttransformator (128) über die vierte Niederspannungswicklung (124) mit der zweiten Sammelschiene (182) und über die fünfte Wicklung (125) mit der Hauptstromversorgungsleitung (183) verbunden ist,
**dadurch gekennzeichnet, dass**
der Hilfstransformator (127) ferner eine zweite Niederspannungswicklung (122) aufweist, wobei der Hilfstransformator (127) über die zweite Niederspannungswicklung (122) mit der ersten Sammelschiene (181) verbunden ist,
wobei das Steuersystem (101) dazu ausgelegt ist, nach einer Unterbrechung der Stromzufuhr von der Hauptstromversorgungsleitung (183):

den ersten Stromverbraucher (126) über die erste Stromschiene (181) mit Strom aus der Wechselstromquelle (120) zu versorgen,
den Hilfstransformator (127) über die zweite Niederspannungswicklung (122) des Hilfstransformators (127) über die erste Stromschiene (181) mit Strom aus der Wechselstromquelle (120) zu versorgen,
den Haupttransformator (128) über die vierte Niederspannungswicklung (124) des Haupttransformators (128), über die zweite Niederspannungswicklung (122) des Hilfstransformators (127), über die erste Sammelschiene (181) mit Strom aus der Wechselstromquelle (120) vorzumagnetisieren,
einen ersten Zustand einer ersten elektrisch leitenden Leitung, die mit der fünften Hochspannungswicklung (125) verbunden ist, und einen zweiten Zustand der Hauptstromversorgungsleitung (183) zu synchronisieren, und
den Haupttransformator (128) mit Strom aus der Hauptstromversorgungsleitung (183) zu versorgen.

2. Elektrische Unterstation nach Anspruch 1, wobei die zweite Niederspannungswicklung (122) dazu ausgelegt ist, den maximalen Einschaltstrom während des Versorgens des Hilfstransformators (127) über die zweite Niederspannungswicklung (122) mit Strom aus der Wechselstromquelle (120) zu minimieren.

3. Elektrische Unterstation nach Anspruch 1 oder 2, wobei das Steuersystem (101) dazu ausgelegt ist, mindestens einen der folgenden Aufgaben durchzuführen:

die erste Sammelschiene (181) durch Schließen eines ersten Schalters (261), der die Wechselstromquelle (120) und die erste Sammelschiene (181) verbindet, mit Strom zu versorgen,
den ersten Stromverbraucher (126) durch Schließen eines zweiten Schalters (262) zu versorgen, der die erste Stromschiene (181) und den ersten Stromverbraucher (126) verbindet,
den Hilfstransformator (127) durch Schließen eines dritten Schalters (263), der die erste Sammelschiene (181) und die zweite Niederspannungswicklung (122) verbindet, zu versorgen,
die zweite Sammelschiene (182) durch Schließen eines vierten Schalters (264), der die dritte Hochspannungswicklung (123) und die zweite Sammelschiene (182) verbindet, zu versorgen,
den Haupttransformator (128) durch Schließen eines fünften Schalters (265), der die zweite Sammelschiene (182) und die vierte Niederspannungswicklung (124) verbindet, vorzumagnetisieren, und
den Haupttransformator (128) durch Schließen eines sechsten Schalters (266), der die fünfte Wicklung (125) mit der Hauptstromversorgungsleitung (183) verbindet, zu versorgen.

4. Elektrische Unterstation nach einem der Ansprüche 1 bis 3, wobei das Steuersystem (101) dazu ausgelegt ist, einen siebten Schalter (267) zu schließen, der die erste Niederspannungswicklung (121) und die erste Sammelschiene (181) verbindet.

5. Elektrische Unterstation nach Anspruch 4, wobei das Steuersystem (101) dazu ausgelegt ist, einen dritten Schalter (263) zu öffnen, der die erste Sammelschiene (181) und die zweite Niederspannungswicklung (122) verbindet.

6. Elektrische Unterstation nach einem der Ansprüche 1 bis 5, wobei das Steuersystem (101) dazu ausgelegt ist, das Vorkommen der Unterbrechung der Stromversorgung von der Hauptstromversorgungsleitung (183) durch Bestimmen einer Abschaltung der ersten Sammelschiene (181), der zweiten Sammelschiene (182), des Hilfstransformators (127) und des Haupttransformators (128) zu bestimmen.

7. Elektrische Unterstation nach einem der Ansprüche 1 bis 6, wobei die erste Niederspannungswicklung (121) und die zweite Niederspannungswicklung (122) dazu ausgelegt sind, mit der gleichen Spannung betrieben zu werden.

8. Elektrische Unterstation nach einem der Ansprüche 1 bis 7, wobei ein erster Nennstrom der ersten Niederspannungswicklung (121) höher ist als ein zweiter Nennstrom der zweiten Niederspannungswicklung (122).

9. Elektrische Unterstation nach einem der Ansprüche 1 bis 8, wobei

die erste Niederspannungswicklung (121) dazu ausgelegt ist, den über die Hauptstromversorgungsleitung (183) zugeführten Strom der ersten Sammelschiene (181) zuzuführen, oder
eine erste Nennspannungsimpedanz der ersten Niederspannungswicklung (121) dazu ausgelegt ist, Strom, der über die Hauptstromversorgungsleitung (183) zugeführt wird, der ersten Sammelschiene (181) zuzuführen.

10. Elektrische Unterstation nach einem der Ansprüche 1 bis 9, wobei

die zweite Niederspannungswicklung (122) dazu ausgelegt ist, den Vormagnetisierungsstrom während der Vormagnetisierung des Haupttransformators (128) zu begrenzen, oder
eine zweite Nennspannungsimpedanz der zweiten Niederspannungswicklung (122) dazu ausgelegt ist, einen Vormagnetisierungsstrom während der Vormagnetisierung des Haupttransformators (128) und einen Einschaltstrom während eines Versorgens des Haupttransformators (128) zu begrenzen.

**11.** Elektrische Unterstation nach einem der Ansprüche 1 bis 10, wobei ein Nennstrom der Stromquelle (120) dazu ausgelegt ist, mindestens den ersten Stromverbraucher (126) zu versorgen, den Hilfstransformator (127) zu versorgen und den Haupttransformator (128) vorzumagnetisieren.

**12.** Verfahren zum Betreiben einer elektrischen Unterstation nach einer Unterbrechung der Stromversorgung von einer Hauptstromversorgungsleitung (183) eines Hauptwechselstromversorgungssystems,

wobei die elektrische Unterstation zum Übertragen von Strom von der Hauptstromversorgungsleitung (183) des Hauptwechselstromversorgungssystems zu einem Wechselstromverteilungssystem zum Verteilen von Strom an zumindest einen ersten Stromverbraucher (126) dient,
wobei die elektrische Unterstation beinhaltet:

einen Hilfstransformator (127), einen Haupttransformator (128), eine erste Sammelschiene (181), die mit dem Verteilungssystem gekoppelt ist, eine zweite Sammelschiene (182), die dazu ausgelegt ist, Strom mit einer höheren Spannung als die erste Sammelschiene (181), aber mit einer niedrigeren Spannung als die Hauptstromversorgungsleitung (183) zu transportieren, eine Wechselstromquelle (120), die mit der ersten Sammelschiene (181) verbunden ist, und ein Steuersystem (101),
wobei der Hilfstransformator (127) eine erste Niederspannungswicklung (121) und eine dritte Hochspannungswicklung (123) aufweist, wobei der Hilfstransformator (127) über die erste Niederspannungswicklung (121) mit der ersten Sammelschiene (181) und über die dritte Hochspannungswicklung (123) mit der zweiten Sammelschiene (182) verbunden ist,
wobei der Haupttransformator (128) eine vierte Niederspannungswicklung (124) und eine fünfte Wicklung (125) aufweist, wobei der Haupttransformator (128) über die vierte Niederspannungswicklung (124) mit der zweiten Sammelschiene (182) und über die fünfte Wicklung (125) mit der Hauptstromversorgungsleitung (183) verbunden ist,
**dadurch gekennzeichnet, dass**
der Hilfstransformator (127) ferner eine zweite Niederspannungswicklung (122) aufweist, wobei der Hilfstransformator (127) über die zweite Niederspannungswicklung (122) mit der ersten Sammelschiene (181) verbunden ist,
wobei das Verfahren umfasst:

Versorgen des ersten Stromverbrauchers über die erste Stromschiene mit Strom aus der Wechselstromquelle (310), Versorgen des Hilfstransformators über die zweite Niederspannungswicklung des Hilfstransformators über die erste Stromschiene mit Strom aus der Wechselstromquelle (320),
Vormagnetisieren des Haupttransformators über die vierte Niederspannungswicklung des Haupttransformators, über die zweite Niederspannungswicklung des Hilfstransformators, über die erste Sammelschiene mit Strom aus der Wechselstromquelle (330),
Synchronisieren eines ersten Zustands einer ersten elektrisch leitenden Leitung, die mit der fünften Hochspannungswicklung verbunden ist, und eines zweiten Zustands der Hauptstromversorgungsleitung (340), und Versorgen des Haupttransformator mit Strom aus der Hauptstromversorgungsleitung (350).

**13.** Verfahren nach Anspruch 12, wobei das Versorgen des Hilfstransformators mit Strom über die zweite Niederspannungswicklung des Hilfstransformators einen kleineren Einschaltstrom erzeugt als das Versorgen des Hilfstransformators über die erste Niederspannungswicklung des Hilfstransformators.

**14.** Verfahren nach Anspruch 12 oder 13, das ferner das Übertragen der Last des ersten Stromverbrauchers von der Wechselstromquelle auf die Hauptstromversorgungsleitung über die erste Niederspannungswicklung umfasst.

**15.** Verwendung der elektrischen Unterstation nach Anspruch 1, um mindestens einen ersten Stromverbraucher mit Strom zu versorgen.

**Revendications**

**1.** Sous-station électrique de transfert d'énergie d'une ligne d'alimentation en énergie principale (183) d'un système d'alimentation en énergie CA principal à un système de distribution CA pour distribuer de l'énergie à au moins un premier consommateur d'énergie (126), la sous-station électrique comprenant :

un transformateur auxiliaire (127), un transformateur principal (128), une première barre omnibus (181) couplés au système de distribution CA, une deuxième barre omnibus (182) configurée pour transporter de l'énergie à une tension supérieure à la première barre omnibus (181) mais à une tension inférieure à la ligne d'alimentation en énergie principale (183), une source d'énergie CA (120) connectée à la première barre omnibus (181), et un système de commande (101),

le transformateur auxiliaire (127) ayant un premier enroulement basse tension (121) et un troisième enroulement haute tension (123), le transformateur auxiliaire (127) étant connecté via le premier enroulement basse tension (121) à la première barre omnibus (181) et via le troisième enroulement haute tension (123) à la deuxième barre omnibus (182),

le transformateur principal (128) ayant un quatrième enroulement basse tension (124) et un cinquième enroulement (125), le transformateur principal (128) étant connecté via le quatrième enroulement basse tension (124) à la deuxième barre omnibus (182) et via le cinquième enroulement (125) à la ligne d'alimentation en énergie principale (183),

**caractérisée en ce que** :

le transformateur auxiliaire (127) a en outre un deuxième enroulement basse tension (122), le transformateur auxiliaire (127) étant connecté à la première barre omnibus (181) via le deuxième enroulement basse tension (122),

le système de commande (101) étant configuré, à la suite d'une interruption d'alimentation en énergie provenant de la ligne d'alimentation en énergie principale (183), pour :

alimenter le premier consommateur d'énergie (126) via la première barre omnibus (181), avec de l'énergie provenant de la source d'énergie CA (120),

exciter le transformateur auxiliaire (127) via le deuxième enroulement basse tension (122) du transformateur auxiliaire (127), via la première barre omnibus (181), avec de l'énergie provenant de la source d'énergie CA (120),

pré-magnétiser le transformateur principal (128) via le quatrième enroulement basse tension (124) du transformateur principal (128), via le deuxième enroulement basse tension (122) du transformateur auxiliaire (127), via la première barre omnibus (181), avec de l'énergie provenant de la source d'énergie CA (120),

synchroniser une première condition d'une première ligne conductrice électrique connectée au cinquième enroulement haute tension (125) et une deuxième condition de la ligne d'alimentation en énergie principale (183), et

exciter le transformateur principal (128) avec de l'énergie provenant de la ligne d'alimentation en énergie principale (183).

2. Sous-station électrique selon la revendication 1, le deuxième enroulement basse tension (122) étant configuré pour minimiser le courant d'appel maximum pendant l'excitation du transformateur auxiliaire (127) via le deuxième enroulement basse tension (122) avec de l'énergie provenant de la source d'énergie CA (120).

3. Sous-station électrique selon la revendication 1 ou 2, le système de commande (101) étant configuré pour réaliser au moins une des étapes suivantes :

exciter la première barre omnibus (181) en fermant un premier commutateur (261) connectant la source d'énergie CA (120) et la première barre omnibus (181),

alimenter le premier consommateur d'énergie (126) en fermant un deuxième commutateur (262) connectant la première barre omnibus (181) et le premier consommateur d'énergie (126),

exciter le transformateur auxiliaire (127) en fermant un troisième commutateur (263) connectant la première barre omnibus (181) et le deuxième enroulement basse tension (122),

exciter la deuxième barre omnibus (182) en fermant un quatrième commutateur (264) connectant le troisième enroulement haute tension (123) et la deuxième barre omnibus (182),

pré-magnétiser le transformateur principal (128) en fermant un cinquième commutateur (265) connectant la deuxième barre omnibus (182) et le quatrième enroulement basse tension (124), et

exciter le transformateur principal (128) en fermant un sixième commutateur (266) connectant le cinquième enroulement (125) et la ligne d'alimentation en énergie principale (183).

4. Sous-station électrique selon l'une quelconque des revendications 1 à 3, le système de commande (101) étant configuré pour fermer un septième commutateur (267) connectant le premier enroulement basse tension (121) et la première barre omnibus (181).

5. Sous-station électrique selon la revendication 4, le système de commande (101) étant configuré pour ouvrir un troisième commutateur (263) connectant la première barre omnibus (181) et le deuxième enroulement basse tension (122).

6. Sous-station électrique selon l'une quelconque des revendications 1 à 5, le système de commande (101) étant configuré pour déterminer la survenue de l'interruption d'alimentation en énergie provenant de la ligne d'alimentation en énergie principale (183) en déterminant une désexcitation de la première barre omnibus (181), de deuxième barre omnibus (182), du transformateur auxiliaire (127) et du transformateur principal (128).

7. Sous-station électrique selon l'une quelconque des revendications 1 à 6, le premier enroulement basse tension (121) et le deuxième enroulement basse tension (122) étant configurés pour fonctionner à la même tension.

8. Sous-station électrique selon l'une quelconque des revendications 1 à 7, une première puissance nominale du premier enroulement basse tension (121) étant supérieure à une deuxième puissance nominale du deuxième enroulement basse tension (122).

9. Sous-station électrique selon l'une quelconque des revendications 1 à 8,

le premier enroulement basse tension (121) étant configuré pour fournir de l'énergie fournie via la ligne d'alimentation en énergie principale (183) à la première barre omnibus (181), ou
une première tension d'impédance nominale du premier enroulement basse tension (121) étant configurée pour fournir de l'énergie fournie via la ligne d'alimentation en énergie principale (183) à la première barre omnibus (181) .

10. Sous-station électrique selon l'une quelconque des revendications 1 à 9,

le deuxième enroulement basse tension (122) étant configuré pour limiter un courant de pré-magnétisation pendant la pré-magnétisation du transformateur principal (128), ou
une deuxième tension d'impédance nominale du deuxième enroulement basse tension (122) étant configurée pour limiter un courant de pré-magnétisation pendant la pré-magnétisation du transformateur principal (128) et un courant d'appel pendant une excitation du transformateur principal (128).

11. Sous-station électrique selon l'une quelconque des revendications 1 à 10, une puissance nominale de la source d'énergie (120) étant configurée pour alimenter au moins le premier consommateur d'énergie (126), exciter le transformateur auxiliaire (127) et pré-magnétiser le transformateur principal (128).

12. Procédé de fonctionnement d'une sous-station électrique à la suite d'une interruption d'alimentation en énergie provenant d'une ligne d'alimentation en énergie principale (183) d'un système d'alimentation en énergie CA principal, la sous-station électrique de transfert d'énergie de la ligne d'alimentation en énergie principale (183) du système d'alimentation en énergie CA principal à un système de distribution CA pour distribuer de l'énergie à au moins un premier consommateur d'énergie (126), la sous-station électrique comportant :

un transformateur auxiliaire (127), un transformateur principal (128), une première barre omnibus (181) couplés au système de distribution, une deuxième barre omnibus (182) configurée pour transporter de l'énergie à une tension supérieure à la première barre omnibus (181) mais à une tension inférieure à la ligne d'alimentation en énergie principale (183), une source d'énergie CA (120) connectée à la première barre omnibus (181), et un système de commande (101),
le transformateur auxiliaire (127) ayant un premier enroulement basse tension (121) et un troisième enroulement haute tension (123), le transformateur auxiliaire (127) étant connecté via le premier enroulement basse tension (121) à la première barre omnibus (181) et via le troisième enroulement haute tension (123) à la deuxième barre omnibus (182),
le transformateur principal (128) ayant un quatrième enroulement basse tension (124) et un cinquième enroulement (125), le transformateur principal (128) étant connecté via le quatrième enroulement basse tension (124) à la deuxième barre omnibus (182) et via le cinquième enroulement (125) à la ligne d'alimentation en énergie principale (183),
**caractérisée en ce que** :

le transformateur auxiliaire (127) a en outre un deuxième enroulement basse tension (122), le transformateur auxiliaire (127) étant connecté à la première barre omnibus (181) via le deuxième enroulement basse tension (122),
le procédé comprenant :

l'alimentation du premier consommateur d'énergie via la première barre omnibus, avec de l'énergie provenant de la source d'énergie CA (310),
l'excitation du transformateur auxiliaire via le deuxième enroulement basse tension du transformateur auxiliaire, via la première barre omnibus, avec de l'énergie provenant de la source d'énergie CA (320),
la pré-magnétisation du transformateur principal via le quatrième enroulement basse tension du transformateur principal, via le deuxième enroulement basse tension du transformateur auxiliaire, via la première barre omnibus, avec de l'énergie provenant de la source d'énergie CA (330),
la synchronisation d'une première condition d'une première ligne conductrice électrique connectée au cinquième enroulement haute tension et une deuxième condition de la ligne d'alimentation en énergie principale (340), et
l'excitation du transformateur principal avec de l'énergie provenant de la ligne d'alimentation en énergie principale (350).

13. Procédé selon la revendication 12, l'excitation du transformateur auxiliaire via le deuxième enroulement basse tension du transformateur auxiliaire produisant un courant d'appel plus faible que l'excitation du transformateur auxiliaire via le premier enroulement basse tension du transformateur auxiliaire.

14. Procédé selon la revendication 12 ou 13, comprenant en outre le transfert de charge du premier consommateur d'énergie de la source d'énergie CA à la ligne d'alimentation en énergie principale via le premier enroulement basse tension.

15. Utilisation de la sous-station électrique selon la revendication 1 pour fournir de l'énergie à au moins un premier consommateur d'énergie.

# FIG. 1

FIG. 2

FIG. 3

```
┌─────────────┐
│     310     │
└─────────────┘
       │
       ▼
┌─────────────┐
│     320     │
└─────────────┘
       │
       ▼
┌─────────────┐
│     330     │
└─────────────┘
       │
       ▼
┌─────────────┐
│     340     │
└─────────────┘
       │
       ▼
┌─────────────┐
│     350     │
└─────────────┘
```

**EP 3 982 511 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9190827 B